# EUROPÄISCHE PATENTSCHRIFT

(11) **EP 0 496 095 B1**
(45) Veröffentlichungstag und Bekanntmachung des Hinweises auf die Patenterteilung: **01.06.1994**
(21) Anmeldenummer: 91122040.8
(22) Anmeldetag: 20.12.1991
(51) Int. Cl.: G01D 5/244, G05F 1/44

(54) **Verfahren zum Überwachen der Ausgangssignale einer Gebereinrichtung**
Method to monitor the ouput signals of a sensor
Méthode pour contrôler les signaux de sortie d'un capteur

(30) Priorität: 21.01.1991 DE 4101608
(43) Veröffentlichungstag der Anmeldung: 29.07.1992
(73) Patentinhaber: SIEMENS AKTIENGESELLSCHAFT, 80333 München (DE)
(72) Erfinder: Rupp, Jürgen, Dipl.-Ing., W-8520 Erlangen (DE)

(56) Entgegenhaltungen:
- DE-A- 2 907 865
- DE-A- 3 843 108
- DE-A- 3 901 546
- MACHINE DESIGN, Bd. 58, Nr. 4, Februar 1986, Cleveland, OH, US, Seiten 93-98; SIDNEY A. WINGATE: "Tracking Down Errors in Linear Encoders"

## Beschreibung

Die Erfindung bezieht auf ein Verfahren zum Überwachen der Ausgangssignale einer Gebereinrichtung für zwei im Idealfall um 90° el zueinander versetzte, sinusförmige, offsetfrei Signale gleicher Amplitude.

Derartige Verfahren sind beispielsweise aus der DE-OS 38 43 108 bekannt. Der zur Durchführung solcher Verfahren beschrittene Weg hat sich zwar in der Vergangenheit bewährt, jedoch ist dabei der schaltungstechnische Aufwand nicht unerheblich.

Aufgabe der Erfindung ist es, ein Verfahren der eingangs genannten Art so auszubilden, daß mit wenigen einfachen Verfahrensschritten Störungen des Verlaufs der Ausgangssignale detektiert werden können.

Gemäß der Erfindung wird diese Aufgabe dadurch gelöst daß,
a) jede positive Halbwelle des ersten Signals ein erstes binäres Hilfssignal in den Zustand logisch "1" versetzt,
b) jede positive Halbwelle des zweiten Signals ein zweites binäres Hilfssignal in den Zustand logisch "1" versetzt,
c) das erste und das zweite Signal hinsichtlich des jeweiligen Absolutbetrages miteinander verglichen werden und ein drittes binäres Hilfssignal in den Zustand logisch "1" versetzt wird, wenn der Absolutbetrag des ersten Signals größer als der Absolutbetrag des zweiten Signals ist,
d) durch eine EX-OR-Verknüpfung des ersten und des zweiten Hilfssignals ein viertes Hilfsssignal gebildet wird, dessen EX-OR-Verknüpfung mit dem dritten Hilfssignal ein erstes Referenzsignal ergibt, und
e) das erste Referenzsignal auf das Einhalten eines Puls-Pausen-Verhältnisses von 1:1 überwacht wird, wobei ein Abweichen von diesem Verhältnis über einen vorgebbaren Schwellwert hinaus ein Meldesignal auslöst, das auf eine Störung der Signale des Gebereinrichtung hinweist. Damit werden prinzipiell Amplituden-, Offset- und Phasenfehler erkennbar.

Damit sichergestellt ist, daß sich während Beschleunigungsvorgängen der Gebereinrichtung keine unzulässigen daraus resultierenden Verzerrungen des ersten Referenzsignals ergeben, ist eine weitere Ausbildung der Erfindung dadurch gekennzeichnet, daß durch eine Teilung von 1:8 aus dem ersten Referenzsignal ein zweites Referenzsignal generiert wird und daß dieses zweite Referenzsignal auf das Einhalten eines Puls-Pausen-Verhältnisses von 1:1 überwacht wird, wobei ein Abweichen von diesem Verhältnis über einen vorgebbaren Grenzwert hinaus ein Meldesignal auslöst, das darauf hinweist, daß die Gebereinrichtung keine konstante Drehzahl aufweist.

In diesem Zusammenhang läßt sich die Überwachung des Puls-Pausen-Verhältnisses schaltungstechnisch besonders leicht dadurch realisieren, daß während der Pulsdauer des zweiten Referenzsignals eine zweite Zähleinrichtung mit einer zugeordneten konstanten Taktfrequenz aus einer Grundstellung heraus fortgezählt wird und während der Pausendauer dieses Signals ein entsprechendes Rückzählen erfolgt und daß eine Abweichung des Zählerendstandes vom Zähleranfangstand ein Maß einer Drehzahländerung darstellt. Die Verwendung der genannten Zähleinrichtung ergibt ferner eine Möglichkeit, daß während einer sehr geringen Drehzahl ein Ausblende der Signalüberwachung möglich ist, indem ein Überschreiten eines vorgegebenen zu erwartenden Zählerstandes der zweiten Zähleinrichtung auf eine für Überwachungszwecke unzulässige geringe Drehzahl der Gebereinrichtung hinweist.

Auch das Einhalten des Puls-Pausen-Verhältnisses von 1:1 beim ersten Referenzsignal läßt sich schaltungstechnisch ausgesprochen einfach dadurch realisieren, daß jeweils während einer ersten Pulsdauer des ersten Referenzsignals eine erste Zähleinrichtung aus einer Grundstellung heraus mit einer zugeordneten konstanten Zählfrequenz fortgeschaltet wird und während der folgenden Pausendauer ein entsprechendes Rückzählen erfolgt und daß eine Abweichung des Zählerendstandes vom Zähleranfangstand auf einen Amplituden- oder einen Offset- Fehler hinweist.

Auch die dritte Fehlerart, nämlich der Phasenfehler kann mit einem solchermaßen ausgebildenden Verfahren dadurch detektiert werden, das während der folgenden Pulspause des ersten Referenzsignals wiederum ein Fortzählen aus der Grundstellung heraus erfolgt, daß während der folgenden Pulsdauer durch ein Rückzählen abgelöst wird und daß für dieses Zählen eine Zählerstandsabweichung auf einen Phasenfehler hinweist.

Ein Ausführungsbeispiel der Erfindung ist der Zeichnung dargestellt und wird im folgenden näher erläutet. Dabei zeigen:
FIG 1 ein Blockschaltbild einer Einrichtung zur Durchführung des Verfahrens,
FIG 2 und FIG 3 signifikante Signalverläufe beim ungestörten Betrieb und
FIG 4 signifikante Signalverläufe beim gestörten Betrieb.

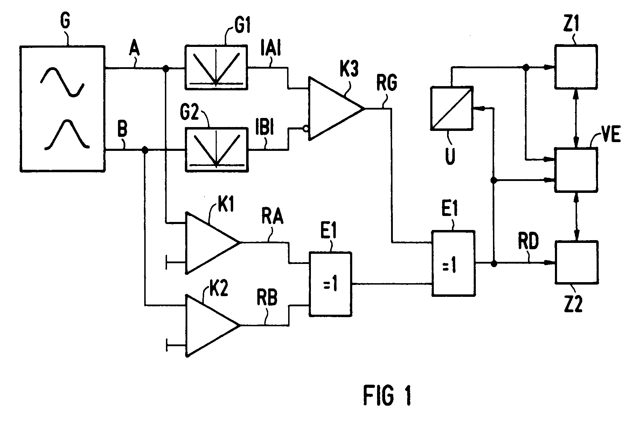

In der Darstellung gemäß FIG 1 ist in Form eines Blockschaltbildes eine für das Verfahren gemäß der Erfindung ausgebildete Einrichtung gezeigt.

Dabei werden von einer Gebereinrichtung G zwei um 90° el zueinander versetzt, sinusförmige, offsetfreie Signale gleicher Amplitude generiert, wobei das erste Signal als Signal A und das zweite Signal als Signal B bezeichnet ist. Das erste Signal A gelangt zum einen an den Eingang einer Gleichrichterstufe G1 und zum andern an den ersten Eingang eines Komparators K1. Das zweite Signal B gelangt an den Eingang einer Gleichrichterstufe G2 und den ersten Eingang eines Komparators K2. Die zweiten Eingänge der Komparatoren K1 und K2 liegen jeweils auf Bezugspotential. Somit liegt am Ausgang des Komparators K1 mit jeder positiven Halbwelle des ersten Signals A ein erstes binäres Hilfssignal RA in einem Zustand logisch "1" vor. Bei jeder negativen Halbwelle des ersten Signals A nimmt das erste binäre Hilfssignal demzufolge den Zustand logisch "0" ein. Für den Komparator K2 und das zweite Signal B gilt, daß jede positive Halbwelle des zweiten Signal B ein zweites binäres Hilfssignal RB in den Zustand logisch "1" versetzt, während jede negative Halbwelle des zweiten Signals B des zweiten binären Hilfssignal RB in den Zustand logisch "0" versetzt.

Die mit Hilfe der Gleichrichterstufen G1 und G2 gleichgerichteten Signale A und B werden als Signale /A/ und /B/ einem Komparator K3 zugeleitet, an dessen Ausgang ein drittes binäres Hilfssignal RC stets dann in einen Zustand logisch "1" versetzt wird, wenn der Absolutbetrag /A/ des ersten Signals A größer als der Absolutbetrag /B/ des zweiten Signals B ist.

Durch eine EX-OR-Verknüpfung des ersten Hilfssignals A und des zweiten Hilfssignals RB wird mit Hilfe eines EX-OR-Gliedes E1 ein viertes Hilfssignal gebildet, dessen EX-OR-Verknüpfung mit dem dritten Hilfssignal RC in einem zweiten EX-OR-Glied E2 ein Referenzsignal RD ergibt. Dieses Referenzsignal RD weist bei einem ordnungsgerechten Betrieb der Gebereinrichtung G ein Puls-Pausen-Verhältnis von 1:1 auf. Dabei werden pro Periode der Gebereinrichtung G vier Perioden des ersten Referenzsignals RD generiert.

Mit Hilfe eines Umsetzers U kann eine Teilung von 1:8 des ersten Referenzsignals RD vorgenommen werden, sodaß ein zweites Referenzsignal RD/8 generiert wird, das zum einen dem Eingang einer Zähleinrichtung Z1 zugeleitet wird und zum andern an eine Vorarbeitungseinrichtung VE gelangt, welche die Zähleinrichtung Z1 in noch zu erläutender Weise wirksam schaltet und das Zählergebnis der Zähleinrichtung Z1 in ebenfalls noch darzulegender Weise überwacht. Entsprechend gelangt das erste Referenzsignal RD ebenfalls an die Verabteilungrichtung VE und eine zweite Zähleinrichtung Z2, wobei auch auf deren Funktion im folgenden noch eingegangen wird.

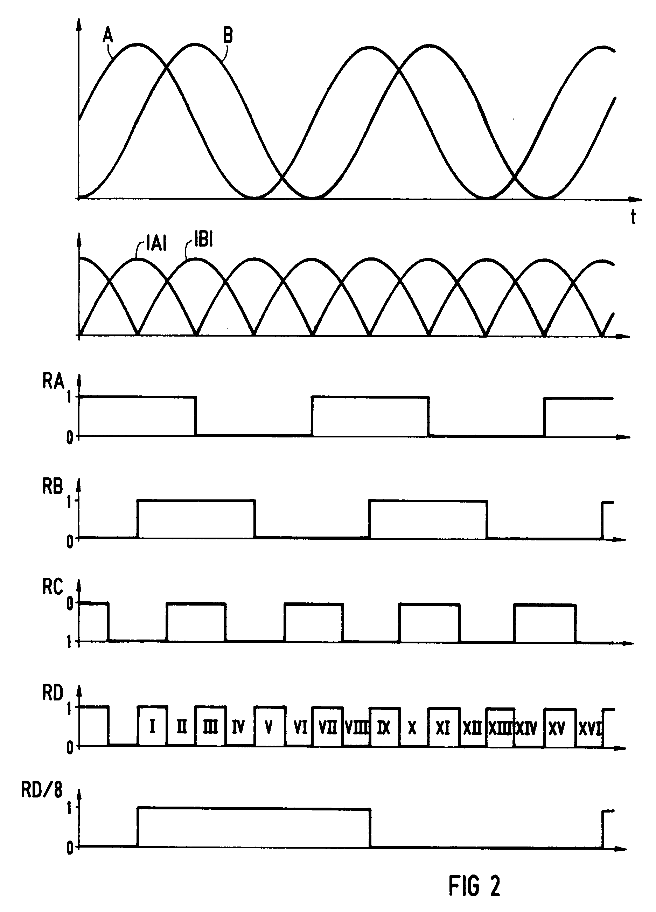

In der Darstellung gemäß FIG 2 sind sieben zeitlich korrespondierende Signalverläufe dargestellt. Das obeste Diagramm zeigt dabei den Verlauf des ersten Signals A und des zweiten Signals B. Im angenommenen Idealzustand sind die beiden Signale von gleicher Amplitude, offsetfrei und um 90° el zueinander versetzt.

Das darunter folgende Diagramm zeigt den Verlauf der Ausgangssignale der Gleichrichterstufe G1 und G2 also der Signale /A/ und /B/.

Das nächste Diagramm zeigt den Verlauf des ersten Hilfssignals, wobei ersichtlicht ist, daß stets dann ein Signal logisch "1" vorliegt, wenn eine positive Halbwelle des ersten Signals A vorliegt und andernfalls ein Signal logisch "0" besteht.

Das folgende Diagramm zeigt den Verlauf des zweiten Hilfssignals RB, das stets dann einen Zustand logisch "1" einnimmt, wenn das zweite Signal B eine positive Halbwelle durchläuft.

Darunter ist das dritte Hilfssignal RC gezeigt, das stets dann einen Zustand logisch "1" einnimmt, wenn der Absolutbetrag /A/ größer ist als der Absolutbetrag /B/, während andernfalls ein Signal logisch "0" vorliegt.

Das im weiteren skizzierte erste Referenzsignal RD ergibt sich dadurch, daß eine EX-OR-Verknüpfung des ersten Hilfssignals RA und des zweiten Hilfssignals RB vorgenommen wird, die wiederum eine EX-OR-Verknüpfung mit dem dritten Hilfssignal RC erfährt. Wenn als Startzeitpunkt eines Zyklusses der Gebereinrichtung G der positiven Nulldurchgang des zweiten Signals B angenommen wird, durchläuft das Signal RD zyklisch acht Perioden, die in der Darstellung als Pulse und Pausen I bis XVI bezeichnet sind. Es zeigt sich, daß dabei das Puls-Pausen-Verhältnis des ersten Referenzsignals RD beim ordnungsgerechten Betrieb der Einrichtung stets 1:1 beträgt.

Im folgenden wird noch erläutet, daß dieses Puls-Pausen-Verhältnis bei Amplituden- Offset- oder Phasenfehlern ein von 1:1 abweichendes Puls-Pausen-Verhältnis einnimmt, jedoch ist aufgrund der zyklischen Geberbewegung auch bei derartigen Fehlern gewährleistet, daß die gesamte Zeitspanne von Beginn des Pulses I bis zum Ende der Pause VIII gerade derjenigen Zeit entspricht, die vom Beginn des Pulses IX bis zum Ende der Pause XVI dauert.

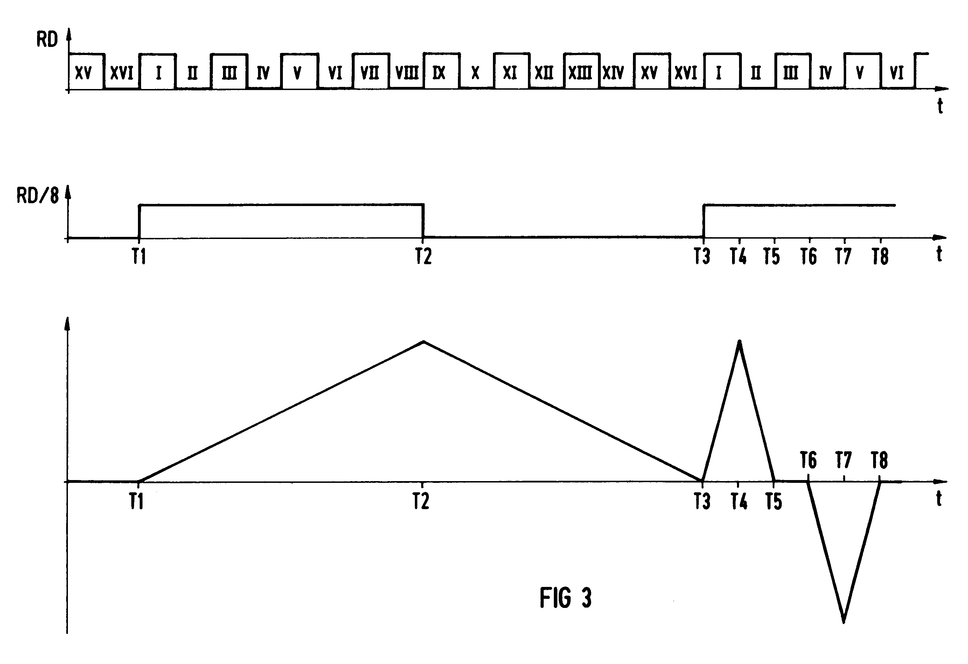

Aus diesem Grunde erfährt das erste Referenzsignal RD eine Teilung von 1:8, die auf das zweite Referenzsignal RD/8 führt. Dieses Signal weist während der ersten oben genannten Zeitspanne ein Signal logisch "1" und während der zweiten oben genannten Zeitspanne ein Signal logisch "0" auf. Wenngleich das zweite Referenzsignal RD/8 auch bei den oben geschilderten Signalfehlern stets ein Puls-Pausen-Verhältnis 1:1 aufweist, so gilt dies doch nur für den Fall, daß die Gebereinrichtung G sich nicht in einer Beschleunigungs- oder Abbremsphase befindet. Gerade während derartiger Phasen sollte jedoch auf eine Überwachung verzichtet werden, da durch dynanische Einflüsse die Signalauswertung gestört sein könnte. Das zweite Referenzsignal RD/8 ist nun jedoch hervorragend geeignet, festzustellen, ob sich die Gebereinrichtung G in einem Bescheunigungs- oder Abbremszustand befindet. Dabei wird nämlich das Puls-Pausen-Verhältnis des zweiten Referenzsignals RD/8 in seinem Puls-Pausen-Verhältnis gegenüber einem Wert von 1:1 (Drehzahlkonstanz!) verzerrt. Wie eine derartige Überwachung erfolgen kann, läßt sich am leichtesten an Hand der Darstellung gemäß der FIG 3 erläuten.

In der Darstellung gemäß FIG 3 sind zeitlich korrespondierend das erste Referenzsignal RD und das zweite Referenzsignal RD/8 gezeigt, während darunter ein Diagramm für Zählerstände des Zählers Z1 und des Zählers Z2 gezeigt ist. Die Verarbeitungseinrichtung VE startet zu Beginn eines Überwachungsvorgangs tunlichst mit einer positiven Signalflanke des zweiten Referenzsignals RD/8 zunächst eine Untersuchungsroutine, die darauf zielt, ob sich die Gebereinrichtung G in einem sicher auswertbaren Zustand konstanter Drehzahl befindet. Dies geschieht so, daß ab einem Zeitpunkt T1 solange, wie ein Signal logisch "1" während einer Impulsdauer des zweiten Referenzsignals RD/8 ansteht, der Zähler Z1 mit konstanter Zählfrequenz hochgezählt wird und dann der Zähler Z1 mit der gleichen Zählfrequenz solange rückgezählt wird, wie die folgende Pulspause dauert. In der Darstellung gemäß FIG 3 würde diese Impulspause von der Zeit T2 bis zu Zeit Z3 andauern. Wenn nun ein Puls-Pausen-Verhältnis von 1:1 des zweiten Referenzsignals RD/8 ordnungsgemäß vorliegt, führt die dazu, daß der Zähler Z1 wieder in seine Ausgangslage vor Beginn des Zählens zurückgezählt worden ist oder zumindest diese Ausgangslage innerhalb eines vorgebbaren Toleranzbandes erreicht hat. Eben hierin liegt das Kriterium, ob ein stationärer Zustand vorliegt, der überhaupt die weitere erfindungsgemäße Signalüberwachung erlaubt. Ermittelt wird dieses Kriterium durch die Verarbeitungseinrichtung VE. Dabei kann jedoch noch ferner festgestellt werden, ob die Gebereinrichtung G auch eine minimale Drehzahl erreicht, für die es typisch ist, daß der Zähler Z1 eine vorgebbare Zählschwelle nicht überschreitet.

Die eigentliche Auswertung der Signalgüte hinsichtlich Amplituden-Offset- und Phasen-Fehler erfolgt zunächst beginnend vom Zeitpunkt T3 an zu einem Zeitpunkt T4, der durch das Ende der Pulsdauer I gegeben ist. Während dieser Zeit wird nämlich der Zähler Z2 mit konstanter Zählfrequenz hochgezählt und während der Pause II des ersten Referenzsignals RD wird eben dieser Zähler Z1 in gleicher Weise rückgezählt. Auch hierbei muß dann, wenn ein Puls-Pausen-Verhältnis von 1:1 vorliegt, was auf ein ordnungsgemäßen Betrieb hindeutet, der Zähler Z2 zur Zeit T5 wieder nahezu seine Ausgangsstellung erreicht haben.

Während des Pulses III des ersten Referenzsignals RD erfolgt kein Betrieb des Zählers Z2 jedoch zur Zeit T6, d.h. mit Beginn einer Pause IV des ersten Referenzsignals RD wird der zweite Zähler Z2 wiederum gestartet und möge - im Ausführungsbeispiel diesmal in negative Zählrichtung - bis zur Zeit T7 hochzählen und dann bis zur Zeit T8, d.h. bis zum Ende der Pulsdauer IV des ersten Referenzsignals RD, wieder rückzählen. Wie angedeutet, läßt die Zählrichtung des Zählers Z2 verschiedene Variationsmöglichkeit zu, jedoch ist es wesentlich, daß die Integration des Zählvorganges über zwei Perioden des ersten Referenzsignals RD durchgeführt wird; und zwar eine, die zuerst logisch "1" und dann logisch "0" aufweist und eine andere, die zuerst logisch "0" und dann logisch "1" einnimmt. Wird der Zählerstand des Zählers Z2 am Ende mindestens einer der beiden Perioden größer als eine vorgebbare Toleranz, liegt ein Fehler hinsichtlich der Signalgüte vor, den die Verarbeitungseinrichtung VE detektiert.

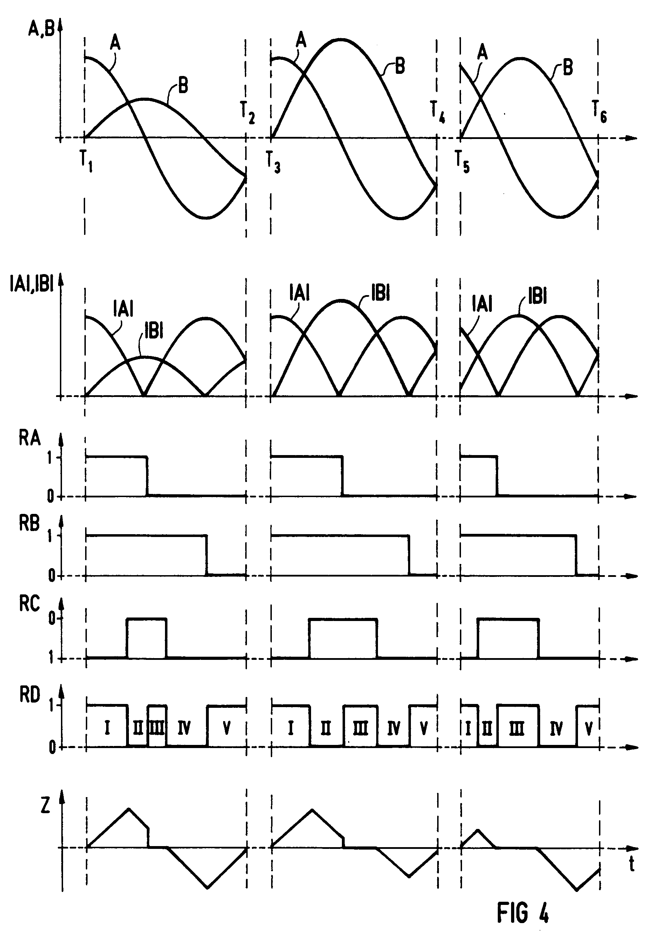

Wie dies in der Praxis aussieht, zeigt die Darstellung gemäß FIG 4, bei der die signifikanten Signalverläufe, wie sie eingangs geschildert worden sind, für einen Amplitudenfehler des ersten Signals A und des zweiten Signals B während einer Periode dargestellt sind die sich von einer Zeit T₁ bis einer Zeit T₂ erstrecken möge, wobei ein Offsetfehler für eine Periode der Gebereinrichtung G während einer Zeitspanne von einer Zeit T₃ bis zu einer Zeit T₄ gezeigt ist und wobei ein Phasenfehler von einer Zeit T₅ bis zu einer Zeit T₆ angedeutet ist. Die Zeitgrenzen sind dabei gestrichelt angedeutet. Unterhalb der Darstellung für das erste Signal A und das zweite Signal B befindet sich zunächst die Darstellung der gleichgerichteten Signale /A/ und /B/; darunter befindet sich eine Darstellung des ersten Hilfssignals RA, des zweiten Hilfssignal RB und das dritte Hilfssignal RC.

Wesentlich für die Fehlererkennung ist jedoch der Verlauf des ersten Referenzsignals RD. Es zeigt sich nämlich, daß bei einem Amplitudenfehler das Verhältnis von Pulsdauer I zu Pulspause II von 1 abweicht, während das Verhältnis von Pulspause IV zu Pulsdauer V weiterhin 1:1 beträgt. Das führt zum darunter liegend angedeuteten fehlertypischen Zählerstandsverlauf.

Auch ein Offsetfehler führt zu einer entsprechenden Abweichung des Zählerstands des Zählers Z2 nach Abschluß einer Pulspause II jedoch auch noch zusäztlich zu einer Abweichung des Zählerstands nach Ablauf der Pulsdauer V.

Ein Phasenfehler ist nach Ablauf einer Pulspause II von der Verarbeitungseinrichtung VE als solcher zunächst noch nicht erkennbar, jedoch führt dieser Fehler dazu, daß nach Ablauf einer Pulsdauer V eine Zählerstandsabweichung des Zählers Z2 vorliegt.

## Patentansprüche

1. Verfahren zum Überwachen der Ausgangssignale einer Gebereinrichtung für zwei im Idealfall um 90° el zueinander versetzte, sinusförmige, offsetfreie Signale gleicher Amplitude, **dadurch gekennzeichnet,** daß
a) jede positive Halbwelle des ersten Signals (A) ein erstes binäres Hilfssignal (RA) in den Zustand logisch "1" versetzt,
b) jede positive Halbwelle des zweiten Signals (B) ein zweites binäres Hilfssignal (RB) in den Zustand logisch "1" versetzt,
c) das erste (A) und das zweite Signal (B) hinsichtlich des jeweiligen Absolutbetrages (/A/ bzw. /B/) miteinander verglichen werden und ein drittes binäres Hilfssignal (RC) in den Zustand logisch "1" versetzt wird, wenn der Absolutbetrag (/A/) des ersten Signals (A) größer als der Absolutbetrag (/B/) des zweiten Signals (B) ist,
d) durch eine EX-OR-Verknüpfung des ersten (RA) und des zweiten Hilfssignals (RB) ein viertes Hilfssignal gebildet wird, dessen EX-OR-Verknüpfung mit dem dritten Hilfssignal (RC) ein erstes Referenzsignal (RD) ergibt, und
e) das erste Referenzsignal (RD) auf das Einhalten eines Puls-Pausen-Verhältnisses von 1:1 überwacht wird, wobei ein Abweichen von diesem Verhältnis über einen vorgebbaren Schwellwert hinaus ein Meldesignal auslöst, das auf eine Störung der Signale der Gebereinreichtung (G) hinweist.

2. Verfahren nach Anpruch 1, **dadurch gekennzeichnet,** daß durch eine Teilung von 1:8 aus dem ersten Referenzsignal (RD) ein zweites Referenzsignal (RD/8) generiert wird und daß dieses zweite Referenzsignal (RD/8) auf das Einhalten eines Puls-Pausen-Verhältnisses von 1:1 überwacht wird, wobei ein Abweichen von diesem Verhältnis über einen vorgebbaren Grenzwert hinaus ein Meldesignal auslöst, das darauf hinweist, daß die Gebereinrichtung (G) keine konstante Drehzahl aufweist.

3. Verfahren nach Anspruch 2, **dadurch gekennzeichnet,** daß während der Pulsdauer des zweiten Referenzsignals (RD/8) eine zweite Zähleinrichtung (Z2) mit einer zugeordneten konstanten Taktfrequenz aus einer Grundstellung heraus fortgezählt wird und während der Pausendauer dieses Signals (RD/8) ein entsprechendes Rückzählen erfolgt und daß eine Abweichung des Zählerendstands vom Zähleranfangsstand ein Maß einer Drehzahländerung darstellt.

4. Verfahren nach Anspruch 3, **dadurch gekennzeichnet,** daß ein Überschreiten eines vorgegebenen zu erwartenden Zählerstands der zweiten Zähleinrichtung (Z2) auf eine für Überwachungzwecke unzulässig geringe Drehzahl der Gebereinrichtung (G) hinweist.

5. Verfahren nach einem der vorstehenden Ansprüche, **dadurch gekennzeichnet,** daß jeweils während einer ersten Pulsdauer (I) des ersten Referenzsignals (RD) eine erste Zähleinrichtung (Z1) aus einer Grundstellung heraus mit einer zugeordneten konstanten Zählfrequenz fortgezählt wird und während der folgenden Pausendauer (II) ein entsprechendes Rückzähler erfolgt und daß eine Abweichung des Zählerendstands von Zähleranfangsstand auf einen Amplituden- oder einen Offset- Fehler hinweist.

6. Verfahren nach Anspruch 5, **dadurch gekennzeichnet,** daß während der folgenden Pulspause (IV) des ersten Referenzsignals (RD) wiederum ein Fortzählen aus der Grundstellung heraus erfolgt, das während der folgenden Pulsdauer (V) durch ein Rückzählen abgelöst wird und daß für dieses Zählen eine Zählerstandsabweichung auf einen Phasenfehler hinweist.

## Claims

1. Process for monitoring the output signals of a transmitting device for two signals, each being sinusoidal, offset-free, of the same amplitude and ideally staggered with respect to one another by 90°, characterized in that
a) each positive half-wave of the first signal (A) transfers a first binary auxiliary signal (RA) into the state logical "1",
b) each positive half-wave of the second signal (B) transfers a second binary auxiliary signal (RB) into the state logical "1",
c) the first signal (A) and the second signal (B) with regard to the respective absolute value (/A/ and /B/) are compared with one another and a third binary auxiliary signal (RC) is transferred into the state logical "1", if the absolute value (/A/) of the first signal (A) is greater than the absolute value (/B/) of the second signal (B),
d) by means of an X-OR-linking of the first auxiliary signal (RA) and the second auxiliary signal (RB) a fourth auxiliary signal is formed, the X-OR-linking of which with the third auxiliary signal (RC) results in a first reference signal (RD), and
e) the first reference signal (RD) is monitored for the keeping of a pulse-pause ratio of 1:1, with a deviation from this ratio beyond a specifiable threshold value triggering a status signal which indicates a disturbance of the signals of the transmitting device (G).

2. Process according to claim 1, characterized in that by means of a division of 1:8 a second reference signal (RD/8) is generated from the first reference signal (RD) and in that this second reference signal (RD/8) is monitored for the keeping of a pulse-pause ratio of 1:1, with a deviation from this ratio beyond a specifiable limiting value triggering a status signal which indicates that the transmitting device (G) does not have any constant speed.

3. Process according to claim 2, characterized in that during the pulse duration of the second reference signal (RD/8) a second counting device (Z2) with an associated constant clock frequency is counted forward from an initial state and during the pause duration of this signal (RD/8) an appropriate backward counting takes place and in that a deviation of the counter end state from the counter start state represents a measure of a speed change.

4. Process according to claim 3, characterized in that an exceeding of a specified count of the second counting device (Z2) to be expected indicates an impermissibly low speed of the transmitting device (G) for monitoring purposes.

5. Process according to one of the above claims, characterized in that in each case during a first pulse duration (I) of the first reference signal (RD) a first counting device (Z1) is counted forward from an initial state with an associated constant counting frequency and during the following pause duration (II) an appropriate backward counting takes place and in that a deviation of the counter end state from the counter start state indicates an amplitude error or an offset error.

6. Process according to claim 5, characterized in that during the following pulse pause (IV) of the first reference signal (RD) in turn a forward counting from the initial state takes place, which is removed during the following pulse duration (V) by a backward counting and in that for this counting a count deviation indicates a phase error.

## Revendications

1. Procédé pour contrôler les signaux de sortie d'un appareil transmetteur ou générateur pour deux signaux sinusoïdaux décalés réciproquement de 90° électriques dans le cas idéal, ne présentant aucun offset et ayant une même amplitude, caractérisé par le fait que
a) chaque alternance positive du premier signal (A) place un premier signal binaire auxiliaire (RA) dans l'état "1" logique,
b) chaque alternance positive du second signal (B) place un second signal binaire auxiliaire (RB) dans l'état "1" logique,
c) les valeurs absolues respectives (|A| et |B|) du premier signal (A) et du second signal (B) sont comparées l'une à l'autre et un troisième signal binaire auxiliaire (C) est placé dans l'état "1" logique lorsque la valeur absolue (|A|) du premier signal (A) est supérieure à la valeur absolue (|B|) du second signal (B),
d) au moyen d'une combinaison OU-EXCLUSIF du premier signal auxiliaire (RA) et du second signal auxiliaire (RB) est formé un quatrième signal auxiliaire, dont la combinaison OU-EXCLUSIF avec le troisième signal auxiliaire (RC) fournit un premier signal de référence (RD), et
e) un contrôle est appliqué au premier signal de référence (RD) pour déterminer s'il respecte un rapport impulsion/pause entre impulsions égal à 1:1, un écart par rapport à ce rapport au-delà d'une valeur de seuil pouvant être prédéterminée déclenchant un signal de signalisation indiquant une perturbation des signaux du transmetteur (G).

2. Procédé suivant la revendication 1, caractérisé par le fait qu'un second signal de référence (RD/8) est produit par division du premier signal de référence (RD) dans le rapport 1:8, et qu'un contrôle de ce second signal (RD/8) est exécuté pour déterminer s'il respecte un rapport impulsion/pause entre impulsions égal à 1:1, un écart par rapport à ce rapport au-delà d'une valeur limite pouvant être prédéterminée déclenchant un signal de signalisation qui indique que le transmetteur (G) ne possède pas une vitesse de rotation constante.

3. Procédé suivant la revendication 2, caractérisé par le fait qu'un second dispositif de comptage (Z2), auquel est associée une fréquence de cadence constante, exécute un comptage progressif à partir d'une position de base pendant la durée de l'impulsion du second signal de référence (RD/8) et exécute un comptage rétrograde correspondant pendant la durée de la pause de ce signal (RD/8) et qu'un écart de l'état final du compteur par rapport à l'état initial du compteur représente une mesure d'une variation de la vitesse de rotation.

4. Procédé suivant la revendication 3, caractérisé par le fait qu'un dépassement d'un état de comptage prédéterminé, auquel on peut s'attendre, du second dispositif de comptage (Z2) indique que la vitesse de rotation du transmetteur (G) possède une faible valeur inadmissible pour l'exécution d'un contrôle.

5. Procédé suivant l'une des revendications précédentes, caractérisé par le fait qu'un premier dispositif de comptage (Z1) exécute un comptage progressif avec une fréquence associée de comptage constante à partir d'une position de base, respectivement pendant une première durée d'impulsion (I) du premier signal de référence (RD) et exécute un comptage régressif correspondant pendant la durée de pause suivante (II), et qu'un écart entre l'état final du compteur et l'état initial du compteur indique une erreur d'amplitude ou une erreur d'offset.

6. Procédé suivant la revendication 5, caractérisé par le fait que pendant la pause suivante (IV) entre impulsions du premier signal de référence (RD), on procède à nouveau, à partir de la position de base, un comptage progressif qui est interrompu par un comptage régressif pendant la durée suivante (V) entre impulsions et que pour ce comptage, un écart de l'état du compteur indique une erreur de phase.
